(19) Europäisches Patentamt
European Patent Office
Office européen des brevets

(11) EP 4 604 199 A1

(12) **EUROPEAN PATENT APPLICATION**
published in accordance with Art. 153(4) EPC

(43) Date of publication:
**20.08.2025 Bulletin 2025/34**

(21) Application number: **23929480.4**

(22) Date of filing: **31.03.2023**

(51) International Patent Classification (IPC):
***H01M 4/134*** *(2010.01)* ***H01M 10/056*** *(2010.01)*

(52) Cooperative Patent Classification (CPC):
**H01M 4/134; H01M 10/056;** Y02E 60/10

(86) International application number:
**PCT/CN2023/085701**

(87) International publication number:
**WO 2024/197897 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
- **XU, Ningbo**
  **Ningde, Fujian 352100 (CN)**
- **LIU, Jing**
  **Ningde, Fujian 352100 (CN)**
- **CHEN, Peipei**
  **Ningde, Fujian 352100 (CN)**

(74) Representative: **Jacob, Reuben Ellis**
**Maucher Jenkins**
**Seventh Floor Offices**
**Artillery House**
**11-19 Artillery Row**
**London SW1P 1RT (GB)**

(54) **SECONDARY BATTERY AND ELECTRIC DEVICE**

(57) Provided in the present application is a secondary battery. The secondary battery comprises: a negative electrode sheet and an electrolyte, wherein the negative electrode sheet comprises a silicon-carbon composite material having a three-dimensional network crosslinked pore structure; and the electrolyte comprises a carboxylate compound. By means of the cooperation of the three-dimensional network crosslinked pore structure of the silicon-carbon composite material and the carboxylate compound of the electrolyte, the volume effect of an active material during a charging and discharging process is inhibited, the internal resistance of the battery is reduced, and the cycle capacity retention rate and the charging and discharging performance at a high rate of the battery are improved.

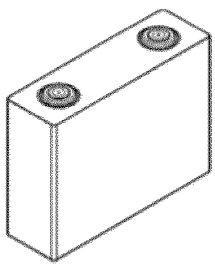


FIG. 1

EP 4 604 199 A1

## Description

TECHNICAL FIELD

The present application relates to the technical field of secondary batteries, and in particular, to a secondary battery and an electric device.

BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace.

Electrode active materials with high specific capacity are often poor in cycle performance and dynamic performance. How to improve the energy density of a battery while ensuring excellent cycle performance and dynamic performance through mutual cooperation of components of the battery is a technical problem to be solved urgently in the field.

SUMMARY

The present application is made in view of the above problems, and its purpose is to provide a secondary battery. Through the matching of the electrolyte and the negative electrode material, the internal resistance of the battery is reduced, and the cycle capacity retention rate and the charge and discharge performance at a high rate of the battery are improved.

The present application provides a secondary battery including a negative electrode plate and an electrolyte. The negative electrode plate includes a silicon-carbon composite material having a three-dimensional network cross-linked pore structure; the electrolyte includes a carboxylate compound.

The silicon-carbon composite material having a three-dimensional network cross-linked pore structure has a stable porous skeleton and good mechanical strength, and can effectively reduce the volume change of silicon before and after charging and discharging while loading a high silicon content. Meanwhile, the carboxylate compound matched in the electrolyte has low viscosity and can easily enter the three-dimensional network cross-linked pore structure of the silicon-carbon composite material, such that the transmission of ions at an active material/electrolyte interface is promoted, the interface impedance is effectively reduced, and thus the cycle performance and the charge and discharge capabilities under a high rate condition of the battery are improved.

In any embodiment, a pore volume of the silicon-carbon composite material is Vm $cm^3/g$, and Vm is defined by the following formula: $\mathrm{Vm} = \frac{1}{\rho\mathrm{true}} \times \frac{\alpha}{1-\alpha}$, where $\rho_{true}$ represents a true density of the silicon-carbon composite material and $\alpha$ represents a porosity of the silicon-carbon composite material; a mass proportion of the carboxylate compound based on the total mass of the electrolyte is EL g/g; EL:Vm is 0.1-11, and optionally 1-8.

When the ratio EL:Vm of the pore volume Vm of the silicon-carbon composite material to the mass proportion of the carboxylate compound in the electrolyte satisfies the range described above, the cycle capacity retention rate and rate capability of the battery can be improved through the mutual cooperation of the carboxylate compound with the pores of the silicon-carbon composite material.

When the ratio EL:Vm of the pore volume Vm of the silicon-carbon composite material to the mass proportion of the carboxylate compound in the electrolyte is 1-8, the high-rate charge performance of the battery is significantly improved while the high cycle capacity retention rate is realized.

In any embodiment, the porosity $\alpha$ of the silicon-carbon composite material is 2%-30%, and optionally 5%-20%.

When the porosity of the silicon-carbon composite material satisfies the range described above, both the mechanical strength of the silicon-carbon composite material and the silicon loading amount can be ensured, and the high-temperature cycle performance and dynamic performance of the battery can be improved through the effective cooperation of the silicon-carbon composite material with the sulfate compound in the electrolyte.

In any embodiment, the true density $\rho_{true}$ of the silicon-carbon composite material is 1.7-2.5, and optionally 1.9-2.3.

When the true density of the silicon-carbon composite material satisfies the range described above, the negative electrode may have a relatively high loading amount, such that the energy density of the secondary battery can be improved.

In any embodiment, a mass proportion of the carboxylate compound based on the total mass of the electrolyte is EL g/g, a specific surface area of the silicon-carbon composite material is SSA, and EL:SSA is 0.002-0.3, and optionally

0.02-0.16 or 0.05-0.12.

When the ratio EL:SSA of the mass proportion of the carboxylate compound in the electrolyte to the specific surface area SSA of the silicon-carbon composite material satisfies the range described above, the carboxylate compound can be effectively embedded into the pore structure of the silicon-carbon composite material to make full contact with the silicon-carbon composite material, so as to increase the migration rate of ions at an electrode/electrolyte interface, thereby reducing the internal resistance of the battery and improving the cycle performance and the high-rate capacity of the battery.

In any embodiment, the specific surface area SSA of the silicon-carbon composite material is 2-10 $m^2/g$, and optionally 3-7 $m^2/g$.

When the specific surface area SSA of the silicon-carbon composite material satisfies the range described above, the silicon-carbon composite material has a large specific surface area and relatively good dynamic performance, which is conducive to improving the initial coulombic efficiency of the battery.

In any embodiment, a mass proportion of the carboxylate compound based on the total mass of the electrolyte is EL g/g, a total pore volume of pores with a pore size less than or equal to 100 nm in the silicon-carbon composite material is V1 $cm^3/g$, and EL:V1 is 1-110 $cm^{-3}$, and optionally 10-80 $cm^{-3}$ or 30-72 $cm^{-3}$.

The carboxylate compound has a relatively small molecular volume, and is easy to enter small pores of the silicon-carbon composite material to form mutual coordination with the silicon-carbon composite material, so as to further improve the migration rate of ions in the electrode active material, thereby improving the cycle performance and rate capability of the battery.

In any embodiment, the carboxylate compound is represented by formula I,

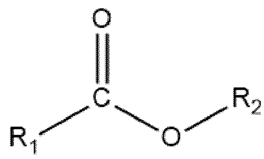

formula I

where $R_1$ and $R_2$ each independently include at least one of H and halogen-substituted or unsubstituted $C_1$-$C_6$ alkyl.

In any embodiment, $R_1$ and $R_2$ each independently include at least one of H, methyl, ethyl, n-propyl, isopropyl, n-butyl, isobutyl, n-pentyl, trifluoromethyl, difluoromethyl, trifluoroethyl, 2-fluoropropyl, 2,2-difluoropropyl, and 1,1,1-trifluorobutyl.

In any embodiment, an electrical conductivity of the electrolyte is 11-19 ms/cm, and optionally 12-16 ms/cm.

In any embodiment, a viscosity of the electrolyte is 2.5-3.7 mPa·s, and optionally 3-3.5 mPa·s.

The carboxylate compound has low viscosity, and the existence of the carboxylate compound in the electrolyte can improve the electrical conductivity of the electrolyte and ensure the migration rate of ions in the electrolyte, thereby improving the cycle performance and rate capability of the battery. When the viscosity of the electrolyte is 2.5-3.7 mPa·s, it is beneficial to the infiltration between the electrolyte and the positive and negative active materials, such that the migration rate of ions in the electrolyte is improved, and thus the internal resistance of the battery is reduced.

In any embodiment, the carboxylate compound is selected from at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-pentyl propionate, isoamyl propionate, ethyl n-butyrate, n-propyl n-butyrate, propyl isobutyrate, n-pentyl n-butyrate, n-pentyl isobutyrate, n-butyl n-butyrate, isobutyl isobutyrate, n-pentyl n-valerate, ethyl 2,2-difluoropropionate, propyl 2,2-difluoropropionate, isopropyl 2,2,2-trifluoroacetate, propyl 2,2,2-trifluoroacetate, isopropyl 2,2,2-trifluoroacetate, methyl 2,2,2-trifluoroacetate, and fluoromethyl 2,2,2-trifluoroacetate.

The carboxylate compounds described above have small molecular volumes and can all effectively enter the three-dimensional network cross-linked pore structure of the silicon-carbon composite material, such that the ion transmission dynamics can be improved, and thus the charge and discharge capabilities under a high rate condition of the battery are improved.

In any embodiment, the silicon-carbon composite material includes: a carbon matrix having a three-dimensional network cross-linked pore structure; and silicon nanoparticles at least partially embedded in the three-dimensional network cross-linked pore structure of the carbon matrix.

When the silicon-carbon composite material having the structure described above is applied to a secondary battery, the cycle performance and the energy density of the secondary battery can be improved.

In any embodiment, a mass proportion of the silicon nanoparticles in the silicon-carbon composite material is greater than or equal to 40%, and optionally 40%-60%.

The negative electrode material used in the secondary battery of the present application realizes high loading of the silicon nanoparticles in the negative electrode material by using the carbon-based material having a three-dimensional network cross-linked pore structure, such that the silicon-carbon composite material has high capacity and can further

improve the energy density of the battery.

In any embodiment, the silicon nanoparticles include one or more of silicon-oxygen compounds, amorphous silicon, crystalline silicon, and silicon-carbon composites.

In any embodiment, the carbon matrix includes one or more of graphite, mesocarbon microbeads, soft carbon, and hard carbon.

In any embodiment, a ratio of a powder compaction density P11 g/cm$^3$ of the silicon-carbon composite material tested after 1 powder compaction under an action force of 20,000 N to a powder compaction density P21 g/cm$^3$ of the silicon-carbon composite material tested after 20 powder compactions under an action force of 20,000 N satisfies: $1.00 < P21/P11 \leq 1.20$, and optionally $1.02 \leq P21/P11 \leq 1.10$.

When the ratio of P21/P11 satisfies the range described above, the silicon-carbon composite material has relatively high specific capacity and relatively good pressure resistance, which improves the structural stability of the negative electrode film layer, thereby enabling the secondary battery containing the material to have relatively high energy density and relatively good cycle performance.

In any embodiment, the powder compaction density P11 g/cm$^3$ of the silicon-carbon composite material tested after 1 powder compaction under an action force of 20,000 N satisfies $1.10 \leq P11 \leq 1.40$, and optionally $1.12 \leq P11 \leq 1.35$.

When the powder compaction density P11 g/cm$^3$ of the silicon-carbon composite material after 1 powder compaction under an action force of 20,000 N satisfies the range described above, the negative electrode film layer has relatively high compaction density, such that the secondary battery has relatively high energy density.

In any embodiment, the secondary battery includes at least one of a lithium ion battery, a sodium ion battery, a magnesium ion battery, and a potassium ion battery.

A second aspect of the present application provides an electric device, including the secondary battery according to the first aspect of the present application.

## BRIEF DESCRIPTION OF THE DRAWINGS

FIG. 1 is a schematic diagram of a secondary battery according to one embodiment of the present application;

FIG. 2 is an exploded view of the secondary battery according to one embodiment of the present application as shown in FIG. 1;

FIG. 3 is a schematic diagram of an electric device using a secondary battery as a power source according to one embodiment of the present application.

Description of the reference numerals:
1: secondary battery; 11: housing; 12: electrode assembly; and 13: cover plate.

## DETAILED DESCRIPTION

Hereinafter, embodiments of the binder, the preparation method, the electrode, the battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9,

10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

With the expansion of the application range of secondary batteries, the requirements for the performance of secondary batteries, such as energy density, have been gradually increasing. The silicon-based material has a high specific capacity and is suitable as a negative electrode material for high-energy-density batteries. However, the silicon-based material has a large volume expansion rate during the charging and discharging process, resulting in poor cycle performance of the batteries. Moreover, a solid electrolyte interface (SEM) film on the surface of the silicon-based material is continuously and repeatedly regenerated along with the expansion of the silicon-based material, thereby increasing the internal resistance of the battery and reducing the dynamic performance.

Based on this, the present application proposes a secondary battery including: a negative electrode plate and an electrolyte. The negative electrode plate includes a silicon-carbon composite material having a three-dimensional network cross-linked pore structure; the electrolyte includes a carboxylate compound.

Herein, the three-dimensional network cross-linked pore structure generally refers to a structure in which two or more pores are intercommunicated or staggered and share a pore volume with each other in a silicon-carbon composite material, particularly in a pore structure formed by carbon matrix particles.

The pore structure of the silicon-carbon composite material can be tested using equipment and methods known in the art. For example, the test can be performed by using a scanning electron microscope (e.g., ZEISS Sigma 300). As an example, the test can be performed according to the following steps: Firstly, a negative electrode plate including the silicon-carbon composite material is cut into a test sample with a certain size (e.g., 6 mm × 6 mm), the test sample is sandwiched between two electrically and thermally conductive sheets (such as copper foils), the test sample and the sheets are stuck and fixed with an adhesive (such as double-sided adhesive) and pressed with a flat iron block with a certain mass (such as about 400 g) for a certain period of time (such as 1 h) to make the gap between the test sample and the copper foils as small as possible, then the edges are trimmed neatly with scissors, and the sample is stuck to a sample stage with a conductive adhesive, with the sample slightly extending beyond the edge of the sample stage. Then, the sample stage is placed into a sample holder and locked in place, an argon ion cross-section polisher (such as IB-19500CP) is turned on and evacuated (e.g., 10 Pa to 4 Pa), the argon flow (e.g., 0.15 MPa), voltage (e.g., 8 KV) and polishing time (e.g., 2 h) are set, the sample stage is adjusted to swing mode, and the polishing is started. After the polishing is completed, an image of the ion-polished cross-sectional morphology (CP) of the test sample is obtained by using a scanning electron microscope (such as ZEISS Sigma 300).

The silicon-carbon composite material having a three-dimensional network cross-linked pore structure has a stable porous skeleton and good mechanical strength, and can effectively reduce the volume change of silicon before and after charging and discharging while loading a high silicon content. Meanwhile, the carboxylate compound matched in the electrolyte has low viscosity and can easily enter the three-dimensional network cross-linked pore structure of the silicon-carbon composite material, such that the transmission of ions at an active material/electrolyte interface is promoted, the interface impedance is effectively reduced, and thus the cycle performance and the charge and discharge capabilities under a high rate condition of the battery are improved.

In any embodiment, a pore volume of the silicon-carbon composite material is Vm $cm^3/g$, and Vm is defined by the following formula: $Vm = \frac{1}{\rho true} \times \frac{\alpha}{1-\alpha}$, where $\rho_{true}$ represents the true density of the silicon-carbon composite material and $\alpha$ represents the porosity of the silicon-carbon composite material; a mass proportion of the carboxylate compound based on the total mass of the electrolyte is EL g/g; a ratio EL:Vm of the pore volume Vm of the silicon-carbon composite material to the mass proportion EL of the carboxylate compound in the electrolyte is 0.1-11, and optionally 1-8.

In some embodiments, a mass proportion of the carboxylate compound based on the total mass of the electrolyte

is EL g/g, a pore volume of the silicon-carbon composite material is Vm, and EL:Vm is 0.1, 0.2, 0.3, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, 8.5, 9, 9.5, 10, 10.5, or 11.

The pore volume Vm of the silicon-carbon composite material can be calculated by the following formula: $\mathrm{Vm} = \frac{1}{\rho\mathrm{true}} \times \frac{\alpha}{1-\alpha}$, where $\rho_{true}$ represents a true density of the silicon-carbon composite material and $\alpha$ represents a porosity of the silicon-carbon composite material. The porosity refers to the ratio of the pore volume within the particles to the total volume of the carbon matrix particles. The porosity can be determined by the gas displacement method according to GB/T 24586. Porosity W = (L1 - L2)/L1 × 100%, where L1 represents the apparent volume of the sample and L2 represents the true volume of the sample. The true density has a well-known meaning in the art, which refers to the actual mass of a solid substance per unit volume of a material in an absolutely dense state, i.e., the density after removal of voids inside the material or voids between particles. It can be determined using instruments and methods known in the art. For example, GB/T 24586-2009 can be referred to for the test method, and a true density tester can be used as the test instrument. As an example, the test can be performed according to the following steps: A clean and dry sample cup is taken and placed on a balance, and the balance is teared. A certain amount of powder sample is added into the sample cup (for example, the sample can occupy 1/2 of the volume of the sample cup), and the mass of the sample is recorded. The sample cup containing the sample is placed in a true density tester for a closed test. Helium gas is introduced, and the pressures of gases in a sample chamber and an expansion chamber are detected. The true volume is calculated according to Boyle's law, and the true density is further calculated.

When the ratio EL:Vm of the pore volume Vm of the silicon-carbon composite material to the mass proportion of the carboxylate compound in the electrolyte satisfies the range described above, the addition amount of the carboxylate compound can form mutual cooperation with the pore volume Vm of the silicon-carbon composite material, thereby improving the cycle capacity retention rate and rate capability of the battery.

When the ratio EL:Vm of the pore volume Vm of the silicon-carbon composite material to the mass proportion of the carboxylate compound is 1-8, the high-rate charge performance of the battery is significantly improved while the high cycle capacity retention rate is realized.

In any embodiment, the porosity $\alpha$ of the silicon-carbon composite material is 2%-30%, and optionally 10%-20%.

In some embodiments, the porosity $\alpha$ of the silicon-carbon composite material is optionally 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, or 30%.

When the porosity of the silicon-carbon composite material satisfies the range described above, both the mechanical strength of the silicon-carbon composite material and the silicon loading amount can be ensured, and the high-temperature cycle performance and dynamic performance of the battery can be improved through the effective cooperation of the silicon-carbon composite material with the sulfate compound in the electrolyte.

In some embodiments, the true density $\rho_{true}$ of the silicon-carbon composite material is 1.7-2.5 g/cm$^3$, and optionally 1.9-2.3 g/cm$^3$.

In some embodiments, the true density $\rho_{true}$ of the silicon-carbon composite material is optionally 1.7 g/cm$^3$, 1.8 g/cm$^3$, 1.9 g/cm$^3$, 2.0 g/cm$^3$, 2.1 g/cm$^3$, 2.2 g/cm$^3$, 2.3 g/cm$^3$, 2.4 g/cm$^3$, or 2.5 g/cm$^3$.

When the true density of the silicon-carbon composite material satisfies the range described above, the negative electrode may have a relatively high loading amount, such that the energy density of the secondary battery can be improved.

In some embodiments, a mass proportion of the carboxylate compound based on the total mass of the electrolyte is EL g/g, a specific surface area of the silicon-carbon composite material is SSA, and EL:SSA is 0.002-0.3, and optionally 0.02-0.16 or 0.05-0.12.

In some embodiments, a mass proportion of the carboxylate compound based on the total mass of the electrolyte is EL g/g, a specific surface area of the silicon-carbon composite material is SSA, and EL:SSA is 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, or 0.3.

Herein, the specific surface area SSA has a well-known meaning in the art, is generally expressed in the unit of m$^2$/g, and can be determined by methods and instruments known in the art. For example, the specific surface area can be determined by the analysis and testing method of specific surface area by inert gas (such as nitrogen) adsorption with reference to GB/T 19587-2017 and calculated by the Brunauer Emmett Teller (BET) method. The analysis and testing method of specific surface area by nitrogen adsorption can be performed by using a Tri-Star model 3020 specific surface area and pore size analyzer from Micromeritics, USA.

When the ratio EL:SSA of the mass proportion of the carboxylate compound in the electrolyte to the specific surface area SSA of the silicon-carbon composite material satisfies the range described above, the carboxylate compound can be effectively embedded into the pore structure of the silicon-carbon composite material to make full contact with the silicon-carbon composite material, so as to increase the migration rate of ions at an electrode/electrolyte interface, thereby

reducing the internal resistance of the battery and improving the cycle performance and the high-rate capacity of the battery.

In some embodiments, the specific surface area SSA of the silicon-carbon composite material is optionally 2 $m^2/g$, 3 $m^2/g$, 4 $m^2/g$, 5 $m^2/g$, 6 $m^2/g$, 7 $m^2/g$, 8 $m^2/g$, 9 $m^2/g$, or 10 $m^2/g$, or a range formed by any two of the values described above.

When the specific surface area SSA of the silicon-carbon composite material satisfies the range described above, the silicon-carbon composite material has a large specific surface area and relatively good dynamic performance, which is conducive to improving the initial coulombic efficiency of the battery.

In some embodiments, a mass proportion of the carboxylate compound based on the total mass of the electrolyte is EL g/g, a total pore volume of pores with a pore size less than or equal to 100 nm in the silicon-carbon composite material is V1 $cm^3/g$, and EL:V1 is 1-110, and optionally 10-80 or 30-72.

GB/T 19587-2004 can be referred to for the test method for pores with different pore sizes. The Barret joyner Halenda (BJH) method for testing mesoporous pore size distribution is used. Under the micro-mesoporous model, the gas adsorption-desorption method is used for testing, and the data of the adsorption branch are selected. Then, the total pore volume V1 of the pores with a pore size less than or equal to 100 nm is determined and statistically calculated.

In some embodiments, a mass proportion of the carboxylate compound based on the total mass of the electrolyte is EL g/g, a total pore volume of pores with a pore diameter less than or equal to 100 nm in the silicon-carbon composite material is V1, and EL:V1 is optionally 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 105, or 110.

The carboxylate compound has a relatively small molecular volume, and is easy to enter small pores of the silicon-carbon composite material to form mutual coordination with the silicon-carbon composite material, so as to further improve the migration rate of ions in the electrode active material, thereby improving the cycle performance and rate capability of the battery.

In some embodiments, the carboxylate compound is represented by formula I,

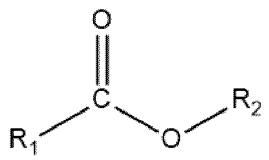

formula I

where $R_1$ and $R_2$ each independently include at least one of H and halogen-substituted or unsubstituted $C_1$-$C_6$ alkyl.

In some embodiments, $R_1$ and $R_2$ each independently include at least one of H, methyl, ethyl, n-propyl, isopropyl, n-butyl, isobutyl, n-pentyl, trifluoromethyl, difluoromethyl, trifluoroethyl, 2-fluoropropyl, 2,2-difluoropropyl, and 1,1,1-trifluorobutyl.

In some embodiments, an electrical conductivity of the electrolyte is 11-19 ms/cm, and optionally 12-16 ms/cm.

In some embodiments, the electrical conductivity of the electrolyte is optionally 11 ms/cm, 12 ms/cm, 13 ms/cm, 14 ms/cm, 15 ms/cm, 16 ms/cm, 17 ms/cm, 18 ms/cm, or 19 ms/cm.

In some embodiments, a viscosity of the electrolyte is 2.5-3.7 mPa·s, and optionally 3-3.5 mPa·s.

In some embodiments, the viscosity of the electrolyte is optionally 2.5 mPa·s, 2.6 mPa·s, 2.7 mPa·s, 2.8 mPa·s, 2.9 mPa·s, 3.0 mPa·s, 3.1 mPa·s, 3.2 mPa·s, 3.3 mPa·s, 3.4 mPa·s, 3.5 mPa·s, 3.6 mPa·s, or 3.7 mPa·s.

The carboxylate compound has low viscosity, and the existence of the carboxylate compound in the electrolyte can improve the electrical conductivity of the electrolyte and ensure the migration rate of ions in the electrolyte, thereby improving the cycle performance and rate capability of the battery. When the viscosity of the electrolyte is 2.5-3.7 mPa·s, it is beneficial to the infiltration between the electrolyte and the positive and negative active materials, such that the migration rate of ions in the electrolyte is improved, and thus the internal resistance of the battery is reduced.

In any embodiment, the carboxylate compound is selected from at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-pentyl propionate, isoamyl propionate, ethyl n-butyrate, n-propyl n-butyrate, propyl isobutyrate, n-pentyl n-butyrate, n-pentyl isobutyrate, n-butyl n-butyrate, isobutyl isobutyrate, n-pentyl n-valerate, ethyl 2,2-difluoropropionate, propyl 2,2-difluoropropionate, ethyl 2,2,2-trifluoroacetate, propyl 2,2,2-trifluoroacetate, isopropyl 2,2,2-trifluoroacetate, methyl 2,2,2-trifluoroacetate, and fluoromethyl 2,2,2-trifluoroacetate.

The carboxylate compounds described above have small molecular volumes and can all effectively enter the three-dimensional network cross-linked pore structure of the silicon-carbon composite material, such that the ion transmission dynamics can be improved, and thus the charge and discharge capabilities under a high rate condition of the battery are improved.

In some embodiments, the silicon-carbon composite material includes: a carbon matrix and silicon nanoparticles. The carbon matrix has a three-dimensional network cross-linked pore structure, and the silicon nanoparticles are at least partially embedded in the three-dimensional network cross-linked pore structure of the carbon matrix.

The carbon matrix particles of the present application have a stable porous skeleton structure, with strong supporting capacity, which is manifested as relatively high stress resistance, and they have excellent mechanical properties and electrical conductivity. The carbon matrix particles include a three-dimensional network cross-linked pore structure, which provides a relatively large amount of space for embedding the silicon-based nanoparticles, and they can be used for storing a large amount of silicon, thereby effectively improving the silicon loading amount in the silicon-carbon composite material. After the carbon matrix particles and the silicon-based nanoparticles are compounded, the electrical conductivity of the silicon-carbon composite material can be improved, the volume effect of silicon during a lithium deintercalation process can be relieved, and the stress change of the silicon-based nanoparticles can be fully borne, such that the structural stability of the silicon-carbon composite material is ensured, and the cycle stability and the lithium storage capacity of the silicon-carbon composite material are improved. Therefore, when the silicon-carbon composite material is applied to a secondary battery, the cycle performance and energy density of the secondary battery can be improved.

In some embodiments, the mass proportion of the silicon nanoparticles in the silicon-carbon composite material is greater than or equal to 40%, and optionally 40%-60%.

In some embodiments, the mass proportion of the silicon nanoparticles in the silicon-carbon composite material is optionally 40%, 45%, 50%, 55%, or 60%.

The mass of the silicon nanoparticles in the silicon-carbon composite material can be determined by methods and equipment known in the art. For example, it can be determined with reference to the EPA 6010D-2014 standard. Specifically, inductively coupled plasma emission spectrometry (ICP-OES) can be used for elemental analysis. A test solid is dissolved into a liquid with a strong acid, then the liquid is introduced into an ICP light source in an atomization mode, and further, after test gaseous atoms are ionized and excited in a strong magnetic field, they return from the excited state to the ground state. During the process described above, the energy is released and recorded as different characteristic spectral lines for the quantitative analysis of trace elements.

The negative electrode material used in the secondary battery of the present application realizes high loading of the silicon nanoparticles in the negative electrode material by using the carbon-based material having a three-dimensional network cross-linked pore structure, such that the silicon-carbon composite material has high capacity and can further improve the energy density of the battery.

In some embodiments, the silicon nanoparticles include one or more of silicon-oxygen compounds, amorphous silicon, crystalline silicon, and silicon-carbon composites.

In some embodiments, the carbon matrix includes one or more of graphite, mesocarbon microbeads, soft carbon, and hard carbon.

In some embodiments, in the outer peripheral region of the silicon-carbon composite material, a mass percentage content A1 of the carbon element of the silicon-carbon composite material relative to the total mass of the silicon-carbon composite material and the mass percentage content B1 of the silicon element of the silicon-carbon composite material relative to the total mass of the silicon-carbon composite material satisfy $0.8 \leq B1/A1 \leq 2.5$, optionally $1 \leq B1/A1 \leq 1.5$. The outer peripheral region of the silicon-carbon composite material is a region which extends from the outer surface of the silicon-carbon composite material to the interior of the silicon-carbon composite material by a distance of r/2 or less, where r represents a short diameter of the silicon-carbon composite material.

The content of the silicon element can be determined by an inductively coupled plasma (ICP) test, specifically as follows: A silicon-carbon composite material is taken as a sample and the sample is digested with aqua regia and hydrofluoric acid (HF). The solution digested for 15 min and the completely digested solution are subjected to an ICP test. The silicon content in the solution digested for 45 min is the silicon content of "the outer peripheral region of the silicon-carbon composite material".

The content of the carbon element can be determined by the infrared absorption method for carbon-sulfur content analysis according to the GB/T 20123-2006 test standard, specifically as follows: A silicon-carbon composite material is taken as a sample, and the carbon content at 20 min of the test is the carbon content of the outer peripheral region of the silicon-carbon composite material.

When A1 and B1 satisfy the range described above, the mass of the silicon nanoparticles attached inside the carbon matrix particles is relatively high, which can significantly increase the capacity of the negative electrode active material, moreover, the voltage for the intercalation of metal ions is relatively low, which is conducive to the intercalation of the metal ions, such that the rate capability of the secondary battery is further improved.

In some embodiments, a ratio of a powder compaction density P11 g/$cm^3$ of the silicon-carbon composite material tested after 1 powder compaction under an action force of 20,000 N to a powder compaction density P21 g/$cm^3$ of the silicon-carbon composite material tested after 20 powder compactions under an action force of 20,000 N satisfies: $1.00 < P21/P11 \leq 1.20$, and optionally $1.02 \leq P21/P11 \leq 1.10$.

When the ratio of P21/P11 satisfies the range described above, the silicon-carbon composite material has relatively high specific capacity and relatively good pressure resistance, which improves the structural stability of the negative electrode film layer, thereby enabling the secondary battery containing the material to have relatively high energy density and relatively good cycle performance.

In some embodiments, the powder compaction density P11 g/cm$^3$ of the silicon-carbon composite material tested after 1 powder compaction under an action force of 20,000 N satisfies $1.10 \leq P11 \leq 1.40$, and optionally $1.12 \leq P11 \leq 1.35$.

When the powder compaction density P11 g/cm$^3$ of the silicon-carbon composite material after 1 powder compaction under an action force of 20,000 N satisfies the range described above, the negative electrode film layer has relatively high compaction density, such that the secondary battery has relatively high energy density.

In some embodiments, the secondary battery includes a negative electrode plate. The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

In some embodiments, the secondary battery includes a positive electrode plate. The positive electrode plate includes a positive electrode current collector and a positive electrode film layer disposed on at least one surface of the positive electrode current collector, and the positive electrode film layer includes a positive electrode active material according to the first aspect of the present application.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a positive electrode active material for use in batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other traditional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as $LiCoO_2$), a lithium nickel oxide (such as $LiNiO_2$), a lithium manganese oxide (such as $LiMnO_2$ or $LiMn_2O_4$), a lithium nickel cobalt oxide, a lithium manganese cobalt oxide, a lithium nickel manganese oxide, a lithium nickel cobalt manganese oxide (such as $LiNi_{1/3}Co_{1/3}Mn_{1/3}O_2$

(also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), a lithium nickel cobalt aluminum oxide (such as $LiNi_{0.85}Co_{0.15}Al_{0.05}O_2$), and modified compounds thereof. Examples of the lithium-containing phosphate with an olivine structure may include, but are not limited to, at least one of lithium iron phosphate (such as $LiFePO_4$ (also referred to as LFP)), a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon.

In some embodiments, the positive electrode active material is a nickel-rich material, and the molar proportion of a nickel element in the transition metal of the positive electrode active material is greater than 85%.

In some embodiments, the positive electrode film layer further optionally includes a binder. As an example, the binder may include at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

In some embodiments, the secondary battery further includes a separation film. The present application does not particularly limit the type of the separation film, and any porous-structure separation film known to have good chemical stability and mechanical stability may be selected and used.

In some embodiments, the separation film may be made of a material selected from at least one of glass fiber, non-woven fabric, polyethylene, polypropylene, and polyvinylidene difluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the secondary battery includes at least one of a lithium ion battery, a sodium ion battery, a magnesium ion battery, and a potassium ion battery.

In one embodiment of the present application, provided is an electric device, which includes the secondary battery according to any one of the embodiments.

The present application does not particularly limit the shape of the secondary battery, and it may have a cylindrical shape, a prismatic shape, or any other shape. For example, FIG. 1 shows a secondary battery 1 having a prismatic structure as one example.

In some embodiments, referring to FIG. 2, the outer packaging may include a housing 11 and a cover plate 13. The housing 11 may include a bottom plate and a side plate connected to the bottom plate, and the bottom plate and the side plate define, in an enclosing manner, an accommodating cavity. The housing 11 is provided with an opening communicating with the accommodating cavity, and the cover plate 13 is capable of lidding the opening to close the accommodating cavity. The positive electrode plate, the negative electrode plate, and the separation film may be subjected to a winding process or a stacking process to form an electrode assembly 12. The electrode assembly 12 is packaged in the accommodating cavity. The electrolyte is infiltrated into the electrode assembly 12. The number of the electrode assembly 12 included in the secondary battery 1 may be one or more, and those skilled in the art can select the number according to specific and actual needs.

The electric device includes the secondary battery provided by the present application. The secondary battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

FIG. 3 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

## Examples

Hereinafter, examples of the present application are described. The examples described below are illustrative

and are merely used to explain the present application, and they should not be construed as limiting the present application. Examples without techniques or conditions specified therein are implemented according to techniques or conditions described in the literature in the art or according to product instructions. Reagents or instruments used herein without specified manufacturers are all commercially available conventional products.

**I. Secondary Battery**

Example 1

(1) Preparation of silicon-carbon composite material

A gas containing a silicon precursor was provided to carbon matrix particles having a three-dimensional network cross-linked pore structure; silicon nanoparticles attached to the carbon matrix particles were generated from the silicon precursor through chemical vapor deposition to obtain a silicon-carbon composite material. The silicon precursor was silane and the carbon matrix was hard carbon. A total volume of pores with a pore size less than or equal to 100 nm in the carbon matrix particles was denoted as Vc2 $cm^3/g$, a total volume of pores with a pore size greater than 100 nm in the carbon matrix particles was denoted as Vc1 $cm^3/g$, and Vc2/Vc1 was 10.5. A powder compaction density P11 of the silicon-carbon composite material tested after 1 powder compaction under an action force of 20,000 N was 1.11 $g/cm^3$, a compaction density of the silicon-carbon composite material tested after 20 powder compactions under an action force of 20,000 N was denoted as P21, and a ratio of P21 to P11 was 1.02.

(2) Preparation of negative electrode plate

A negative electrode active material (silicon-carbon composite), conductive carbon black, a thickener (sodium carboxymethylcellulose (CMC)) and a binder (styrene-butadiene rubber emulsion (SBR)) were thoroughly mixed with stirring according to a weight ratio of 96.5:1.0:1.0:1.5 in a proper amount of deionized water to form a uniform negative electrode slurry. Then, a negative electrode current collector was coated with the negative electrode slurry, and the coated negative electrode current collector was subjected to processes such as drying to obtain a negative electrode plate.

(3) Preparation of positive electrode plate

An aluminum foil with a thickness of 8 μm was used as a positive electrode current collector. A positive electrode active material ($LiNi_{0.8}Co_{0.1}Mn_{0.1}O_2$ ($NCM_{811}$)), a conductive agent (acetylene black), and a binder (polyvinylidene difluoride (PVDF)) were dissolved according to a weight ratio of 93:2:5 in a solvent (N-methylpyrrolidone (NMP)), and thoroughly mixed well with stirring to obtain a positive slurry. Then, a positive electrode current collector was uniformly coated with the positive electrode slurry, and the coated positive electrode current collector was subjected to drying, cold pressing and cutting to obtain a positive electrode plate.

(4) Preparation of electrolyte

Ethylene carbonate (EC), ethyl methyl carbonate (EMC), and diethyl carbonate (DEC) were mixed according to a volume ratio of 1:1:1 to obtain an organic solvent. Then, a fully dried lithium salt ($LiPF_6$) was dissolved in the mixed organic solvent to prepare an electrolyte with a concentration of 1 mol/L. Then, 0.4 wt% of ethyl acetate was added according to a certain mass ratio, and the mixture was well mixed.

(5) Separation film

A polypropylene film was used as the separation film.

(6) Preparation of battery

The positive electrode plate, the separation film, and the negative electrode plate were stacked in sequence, with the separation film placed between the positive electrode plate and the negative electrode plate to fulfill the function of separation. Then, the stack was wound to obtain a bare battery cell, and the tabs were welded to the bare battery cell. The bare battery cell was placed in an aluminum shell, which was then baked at 80 °C to remove water, injected with an electrolyte, and sealed to obtain an uncharged battery. The uncharged battery was then subjected to the processes of standing, hot and cold pressing, formation, shaping, capacity testing, and the like sequentially, to obtain the lithium ion battery product of Example 1.

Examples 2-3

The batteries of Examples 2-3 were prepared in a similar manner to that of Example 1, except that the type of additives was adjusted. The specific parameters are shown in Table 1.

Examples 4-7

The batteries of Examples 4-7 were prepared in a similar manner to that of Example 1, except that the mass proportion of the electrolyte additive in the electrolyte was adjusted. The specific parameters are shown in Table 1.

Examples 8-11

The batteries of Examples 8-11 were prepared in a similar manner to that of Example 1, except that the pore volume Vm was adjusted by the adjustment of the porosity $\alpha$ of the silicon-carbon composite material. The pore volume was calculated by $Vm = 1/\rho_{true} \times \alpha/(1 - \alpha)$.

Comparative Example 1

Comparative Example 1 is substantially the same as Example 1, except that the carboxylate compound was not added to the electrolyte.

Comparative Example 2

The pore structure of the carbon matrix particles of Comparative Example 2 was a honeycomb-like pore structure in which pores were not in communication, which was not conducive to providing sufficient space for deposition of silicon, resulting in a relatively low deposition amount of silicon and a silicon particle mass ratio of 7.3% in the composite material.

**II. Test Method**

1. Silicon-carbon composite material

1) Structural characterization of silicon-carbon composite material

The pore structure of the silicon-carbon composite material can be tested using equipment and methods known in the art. For example, the test can be performed by using a scanning electron microscope (e.g., ZEISS Sigma 300). As an example, the test can be performed according to the following steps: Firstly, a negative electrode plate including the silicon-carbon composite material was cut into a test sample with a certain size (e.g., 6 mm × 6 mm), the test sample was sandwiched between two electrically and thermally conductive sheets (such as copper foils), the test sample and the sheets were stuck and fixed with an adhesive (such as double-sided adhesive) and pressed with a flat iron block with a certain mass (such as about 400 g) for a certain period of time (such as 1 h) to make the gap between the test sample and the copper foils as small as possible, then the edges were trimmed neatly with scissors, and the sample was stuck to a sample stage with a conductive adhesive, with the sample slightly extending beyond the edge of the sample stage. Then, the sample stage was placed into a sample holder and locked in place, an argon ion cross-section polisher (such as IB-19500CP) was turned on and evacuated (e.g., 10 Pa to 4 Pa), the argon flow (e.g., 0.15 MPa), voltage (e.g., 8 KV) and polishing time (e.g., 2 h) were set, the sample stage was adjusted to swing mode, and the polishing was started. After the polishing was completed, an image of the ion-polished cross-sectional morphology (CP) of the test sample was obtained by using a scanning electron microscope (such as ZEISS Sigma 300).

2) Porosity of silicon-carbon composite material

A battery was disassembled and a powder was scraped from the negative electrode film layer. After high-temperature ablation of the powder, a binder was removed to obtain a silicon-carbon composite material powder. The porosity was determined by the gas displacement method according to GB/T 24586. Porosity $P = (V1 - V2)/V1 \times 100\%$, where V1 represents the apparent volume and V2 represents the true volume of the sample.

3) Specific surface area SSA of silicon-carbon composite material

The specific surface area was determined by the gas adsorption method according to the GB/T 19587-2017 test

standard, specifically as follows: A silicon-carbon composite material was taken as a sample, and a sample tube was immersed in liquid nitrogen at -196 °C. The adsorption amount of nitrogen on the solid surface under different pressures was determined under a relative pressure of 0.05-0.30. The monolayer adsorption amount of the sample was obtained based on the BET multilayer adsorption theory and its formula, and thus the specific surface area of the negative electrode active material was calculated.

The calculation formula of BET is as follows:

$$\frac{P/P_0}{n_a(1-P/P_0)} = \frac{1}{n_m C} + \frac{C-1}{n_m C} \cdot \frac{P}{P_0}$$

where $n_a$ represents the amount of adsorbed gas, in mol/g; $p/p_0$ represents the relative pressure; nm represents the monolayer adsorption amount; C represents the adjustment parameter for limiting the number of adsorption layers on the adsorbent surface.

4) Pore size of silicon-carbon composite material

The pore size was determined by the gas adsorption method according to the GB/T 19587-2017 and GB/T 21650.2-2008 test standards, specifically as follows: A silicon-carbon composite material was taken as a sample, and the sample tube was immersed in liquid nitrogen at -196 °C. Nitrogen was adsorbed onto the test material under a relative pressure of 0-1. The pore size distribution of the porous material was characterized based on the relationship diagram of the volume of pores at different size levels vs. the corresponding partial pressures.

5) True density of silicon-carbon composite material

With reference to GB/T 24586-2009, a true density tester was used as the test instrument. As an example, the test was performed according to the following steps: A clean and dry sample cup containing a silicon-carbon composite material was taken and placed on a balance, and the balance was teared. A certain amount of powder sample was added into the sample cup (for example, the sample occupies 1/2 of the volume of the sample cup), and the mass of the sample was recorded. The sample cup containing the sample was placed in a true density tester for a closed test. Helium gas was introduced, and the pressures of gases in a sample chamber and an expansion chamber were detected. The true volume was calculated according to Boyle’s law, and the true density was further calculated.

6) Mass content of silicon nanoparticles in silicon-carbon composite material

The test was performed by methods and equipment known in the art. For example, the test was performed with reference to the EPA 6010D-2014 standard. Specifically, inductively coupled plasma emission spectrometry (ICP-OES) was used for elemental analysis. A test sample was dissolved into a liquid with a strong acid, then the liquid was introduced into an ICP light source in an atomization mode, and further, after test gaseous atoms were ionized and excited in a strong magnetic field, they returned from the excited state to the ground state. During the process described above, the energy was released and recorded as different characteristic spectral lines for the quantitative analysis of trace elements.

2. Electrolyte

1) Test of electrical conductivity of electrolyte

The electrical conductivity of the electrolyte was determined by using a DDSJ-319L conductivity meter from Shanghai Leici. The specific test method was as follows. The conductance cell and the electrode were first rinsed with distilled water for three times, and then with a small amount of test electrolyte for three times. Then, the test electrolyte was poured into the conductance cell until the liquid level exceeded the platinum sheet of the electrode in the conductivity cell by 1-2 cm, and the conductance cell was then placed into a constant temperature tank that had been kept at a constant test temperature, and kept at the constant temperature for 15-20 min. The "calibration/measurement" button was adjusted to the "measurement" position, a proper measurement range was selected, and the electrical conductivity of the electrolyte was determined.

2) Test of viscosity of electrolyte

The viscosity of the electrolyte was determined using a Brookfield cone-and-plate viscometer. The specific test

method was as follows. The temperature of the sample was controlled using a TC-650 water bath circulation system (the test temperature was 25 °C). Then, Rheocalc T software was used to connect to the host for program editing and data collection, and then the viscosity change curve was plotted. A certain amount of electrolyte was taken and added into a sample cup, the sample cup was fixed onto a viscometer, and then the viscometer host was connected to the TC-650 water bath circulation system. The corresponding test program was edited on Rheocalc T software, and the measurement was started after the temperature of the sample stabilized.

3. Battery performance

1) Cycle capacity retention rate

At 25 °C, the secondary batteries prepared in the examples and comparative examples were subjected to constant current charging at a rate of 0.5 C to a charge cut-off voltage of 4.25 V, followed by constant voltage charging to a current of ≤ 0.05 C, left to stand for 5 min, then subjected to constant current discharging at a rate of 0.33 C to a discharge cut-off voltage of 2 V, and left to stand for 5 min, which was a charge-discharge cycle. The batteries were subjected to cyclic charge-discharge tests according to the method, and the capacity retention rates of the lithium ion batteries after 800 cycles were calculated.

2) Test of charge and discharge performance under high rate condition

At 25 °C, the secondary batteries prepared in the examples and comparative examples were subjected to constant current charging at a rate of 0.5 C to a charge cut-off voltage of 4.25 V, followed by constant voltage charging to a current of ≤ 0.05 C, left to stand for 5 min, then subjected to constant current discharging at a rate of 0.33 C to a discharge cut-off voltage of 2 V, and left to stand for 5 min, which was the first charge-discharge cycle. Then, the batteries were subjected to constant current charging at a rate of 2 C to a charge cut-off voltage of 4.25 V, followed by constant current discharging at a rate of 0.33 C to a discharge cut-off voltage of 2 V. The batteries were subjected to cyclic charge-discharge tests according to the method, and the capacity retention rates of the lithium ion batteries after 800 cycles were calculated.

3) Internal resistance of battery

At 25 °C, the secondary batteries prepared in the examples and comparative examples and the lithium ion batteries after 800 cycles at rate of 2C at 25 °C were subjected to constant current charging at 1 C to 4.3 V. Then, the batteries were subjected to constant voltage charging at 4.3 V to a current of less than 0.05 C, followed by discharging at 1 C for 30 min, thereby adjusting the state of charge (SOC) of the battery to 50%. Then, positive and negative test leads of the TH2523A alternating current internal resistance tester were made to contact the positive and negative electrodes of the batteries, respectively. The internal resistance values of the batteries were read by the internal resistance tester and recorded as initial internal resistance (mΩ) of the batteries and internal resistance (mΩ) of the batteries after 800 cycles, respectively.

III. Analysis of test results of examples and comparative examples

The secondary batteries of the examples and comparative examples were prepared according to the methods described above, and various parameters were measured. The results are shown in Table 1 below.

Table 1

| No. | Negative electrode active material | Components of electrolyte | EL/Vm | EL/SSA | EL/V1 | Capacity retention rate after 800 cycles (25 °C, 0.5 C charging rate) | Capacity retention rate after 800 cycles (25 °C, 2 C charging rate) | Initial internal resistance (mΩ) | Internal resistance (mΩ) after 800 cycles (25 °C, 2C charging rate) |
|---|---|---|---|---|---|---|---|---|---|
| Example 1 | Three-dimensional network cross-linked structure | Ethyl acetate | 5.00 | 0.1 | 50 | 56% | 36% | 1053 | 2212 |
| Example 2 | Three-dimensional network cross-linked structure | Ethyl formate | 5.00 | 0.1 | 50 | 52% | 32% | 1078 | 2312 |
| Example 3 | Three-dimensional network cross-linked structure | Ethyl propionate | 5.00 | 0.1 | 50 | 51% | 31% | 1077 | 2313 |
| Example 4 | Three-dimensional network cross-linked structure | Ethyl acetate | 1.00 | 0.02 | 10 | 45% | 25% | 1097 | 2651 |
| Example 5 | Three-dimensional network cross-linked structure | Ethyl acetate | 8.00 | 0.16 | 80 | 46% | 26% | 1096 | 2652 |
| Example 6 | Three-dimensional network cross-linked structure | Ethyl acetate | 0.10 | 0.002 | 1 | 31% | 7% | 1150 | 3145 |
| Example 7 | Three-dimensional network cross-linked structure | Ethyl acetate | 11.00 | 0.22 | 110 | 32% | 8% | 1148 | 3144 |

(continued)

| No. | Negative electrode active material | Components of electrolyte | EL/Vm | EL/SSA | EL/V1 | Capacity retention rate after 800 cycles (25 °C, 0.5 C charging rate) | Capacity retention rate after 800 cycles (25 °C, 2 C charging rate) | Initial internal resistance (mΩ) | Internal resistance (mΩ) after 800 cycles (25 °C, 2C charging rate) |
|---|---|---|---|---|---|---|---|---|---|
| Example 8 | Three-dimensional network cross-linked structure | Ethyl acetate | 5.00 | 0.05 | 30 | *55%* | 35% | 1052 | 2210 |
| Example 9 | Three-dimensional network cross-linked structure | Ethyl acetate | 5.00 | 0.12 | 72 | 51% | 31% | 1079 | 2310 |
| Example 10 | Three-dimensional network cross-linked structure | Ethyl acetate | 5.00 | 0.01 | 6 | 35% | 9% | 1135 | 3130 |
| Example 11 | Three-dimensional network cross-linked structure | Ethyl acetate | 5.00 | 0.18 | 108 | 36% | 10% | 1136 | 3131 |
| Comparative Example 1 | Three-dimensional network cross-linked structure | / | / | / | / | 20% | *5%* | 1150 | 3150 |
| Comparative Example 2 | Honeycomb-like pore structure | Ethyl acetate | 5.00 | 0.1 | 50 | 20% | 3% | 1500 | 3500 |

As can be seen from the results of Table 1, the negative electrode active materials of the batteries of Examples 1-11 are silicon-carbon composite materials having a three-dimensional network cross-linked pore structure, and the electrolytes contain the carboxylate compound. The batteries of Examples 1-11 exhibit lower internal resistance, higher cycle capacity retention rate, and more excellent charge and discharge performance at a high rate than the battery of Comparative Example 1 in which the negative electrode active material is a silicon-carbon composite material having a three-dimensional network cross-linked pore structure and the electrolyte does not contain the carboxylate compound, and the battery of Comparative Example 2 in which the negative electrode active material is a silicon-carbon composite material having a honeycomb-like pore structure and the electrolyte contains the carboxylate compound.

In the comparative examples, the negative electrode is made of the silicon-carbon composite material having a honeycomb-like pore structure, and silicon particles are not easy to deposit in the honeycomb-like pore structure. Therefore, the silicon-based particles in the silicon-carbon composite material having the honeycomb-like pore structure have a low mass content of only 7%, the silicon element is concentratedly distributed on the surface of the composite material, and the carbon matrix is difficult to play a role in limiting the expansion of the silicon-based particles, resulting in poor cycle performance of the batteries.

From the comparison of Examples 4-5 and Examples 6-7, it can be seen that by controlling the ratio EL:Vm of the pore volume Vm of the silicon-carbon composite material and the mass proportion EL of the carboxylate compound in the electrolyte within the range of 1-8, the rate capability of the battery can be remarkably improved while the cycle capacity retention rate of the battery is improved.

From Examples 8-11, it can be seen that by further controlling the ratio EL:SSA of the mass proportion of the carboxylate compound in the electrolyte and the specific surface area SSA of the silicon-carbon composite material to be 0.05-0.12 or EL:V1 to be 30-72, the battery exhibits more excellent cycle performance and rate capability.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

**1.** A secondary battery, comprising:

a negative electrode plate comprising a silicon-carbon composite material having a three-dimensional network cross-linked pore structure; and
an electrolyte comprising a carboxylate compound.

**2.** The secondary battery according to claim 1, wherein

a pore volume of the silicon-carbon composite material is Vm $cm^3/g$, and Vm is defined by the following formula:

$Vm = \frac{1}{\rho true} \times \frac{\alpha}{1-\alpha}$, wherein $\rho_{true}$ represents a true density of the silicon-carbon composite material and $\alpha$ represents a porosity of the silicon-carbon composite material;
a mass proportion of the carboxylate compound based on the total mass of the electrolyte is EL g/g;
a ratio EL:Vm of the pore volume Vm of the silicon-carbon composite material to the mass ratio EL of the carboxylate compound in the electrolyte is 0.1-11, and optionally 1-8.

**3.** The secondary battery according to claim 2, wherein the porosity $\alpha$ of the silicon-carbon composite material is 2%-30%, and optionally 10%-20%.

**4.** The secondary battery according to claim 3 or 4, wherein the true density $\rho_{true}$ of the silicon-carbon composite material is 1.7-2.5 $g/cm^3$, and optionally 1.9-2.3 $g/cm^3$.

**5.** The secondary battery according to any one of claims 1 to 4, wherein a mass proportion of the carboxylate compound based on the total mass of the electrolyte is EL g/g, a specific surface area of the silicon-carbon composite material is SSA, and EL:SSA is 0.002-0.3, and optionally 0.02-0.16 or 0.05-0.12.

6. The secondary battery according to any one of claims 1 to 5, wherein the specific surface area SSA of the silicon-carbon composite material is 2-10 $m^2/g$, and optionally 3-7 $m^2/g$.

7. The secondary battery according to any one of claims 1 to 6, wherein a mass proportion of the carboxylate compound based on the total mass of the electrolyte is EL g/g, a total pore volume of pores with a pore size less than or equal to 100 nm in the silicon-carbon composite material is V1 $cm^3/g$, and EL:V1 is 1-110, and optionally 10-80 or 30-72.

8. The secondary battery according to any one of claims 1 to 7, wherein the carboxylate compound is represented by formula I,

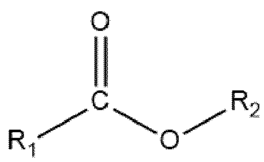

formula I

wherein $R_1$ and $R_2$ each independently comprise at least one of H and halogen-substituted or unsubstituted $C_1$-$C_6$ alkyl.

9. The secondary battery according to any one of claim 8, wherein $R_1$ and $R_2$ each independently comprise at least one of H, ethyl, n-propyl, isopropyl, n-butyl, isobutyl, n-pentyl, trifluoromethyl, difluoromethyl, trifluoroethyl, 2-fluoropropyl, 2,2-difluoropropyl, and 1,1,1-trifluorobutyl.

10. The secondary battery according to any one of claims 1 to 9, wherein an electrical conductivity of the electrolyte is 11-19 ms/cm, and optionally 12-16 ms/cm.

11. The secondary battery according to any one of claims 1 to 10, wherein a viscosity of the electrolyte is 2.5-3.7 mPa·s, and optionally 3-3.5 mPa·s.

12. The secondary battery according to any one of claims 1 to 11, the carboxylate compound is selected from at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-pentyl propionate, isoamyl propionate, ethyl n-butyrate, n-propyl n-butyrate, propyl isobutyrate, n-pentyl n-butyrate, n-pentyl isobutyrate, n-butyl n-butyrate, isobutyl isobutyrate, n-pentyl n-valerate, ethyl 2,2-difluoropropionate, propyl 2,2-difluoropropionate, ethyl 2,2,2-trifluoroacetate, propyl 2,2,2-trifluoroacetate, isopropyl 2,2,2-trifluoroacetate, methyl 2,2,2-trifluoroacetate, and fluoromethyl 2,2,2-trifluoroacetate.

13. The secondary battery according to any one of claims 1 to 12, wherein the silicon-carbon composite material comprises: a carbon matrix having a three-dimensional network cross-linked pore structure; and silicon nanoparticles at least partially embedded in the three-dimensional network cross-linked pore structure of the carbon matrix.

14. The secondary battery according to claim 13, wherein a mass proportion of the silicon nanoparticles in the silicon-carbon composite material is greater than or equal to 40%, and optionally 40%-60%.

15. The secondary battery according to claim 13 or 14, wherein the silicon nanoparticles comprise one or more of silicon-oxygen compounds, amorphous silicon, crystalline silicon, and silicon-carbon composites.

16. The secondary battery according to any one of claims 13-15, wherein the carbon matrix comprises one or more of graphite, mesocarbon microbeads, soft carbon, and hard carbon.

17. The secondary battery according to any one of claims 1 to 16, wherein a ratio of a powder compaction density P11 $g/cm^3$ of the silicon-carbon composite material tested after 1 powder compaction under an action force of 20,000 N to a compaction density P21 $g/cm^3$ of the silicon-carbon composite material tested after 20 powder compactions under an action force of 20,000 N satisfies: $1.00 < P21/P11 \leq 1.20$, and optionally $1.02 \leq P21/P11 \leq 1.10$.

18. The secondary battery according to any one of claims 1 to 17, wherein the powder compaction density P11 $g/cm^3$ of the silicon-carbon composite material tested after 1 powder compaction under an action force of 20,000 N satisfies: 1.10 ≤

P11 ≤ 1.40, and optionally 1.12 ≤ P11 ≤ 1.35.

**19.** The secondary battery according to any one of claims 1 to 18, wherein the secondary battery comprises at least one of a lithium ion battery, a sodium ion battery, a magnesium ion battery, and a potassium ion battery.

**20.** An electric device, comprising the secondary battery according to any one of claims 1 to 19.

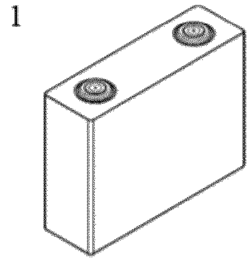


FIG. 1

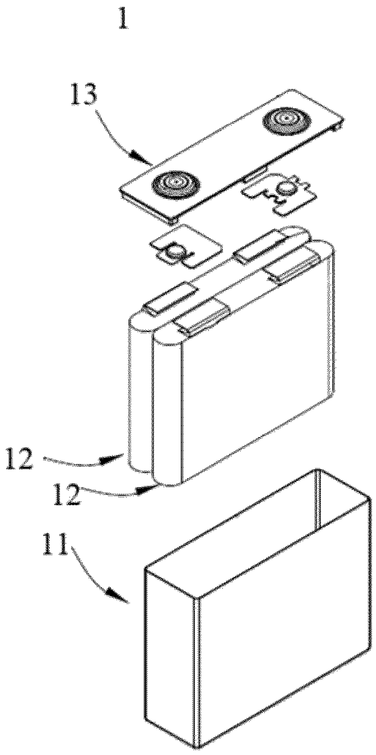


FIG. 2

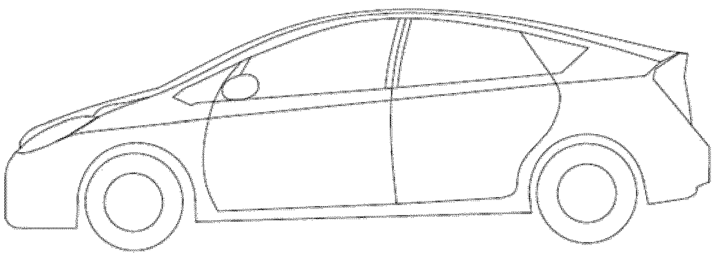

FIG. 3

**INTERNATIONAL SEARCH REPORT**

International application No.
**PCT/CN2023/085701**

**A. CLASSIFICATION OF SUBJECT MATTER**

H01M4/134(2010.01)i; H01M10/056(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; ISI: 电池, 负极, 阳极, 碳, 硅, 三维, 网络, 纤维, 骨架, 交联, 连接, 互连, 孔, 气相, 沉积, 电解液, 羧酸酯, cathode, anode, carbon, silicon, three-dimensional, interconnection, hole, cvd, electrolyte, carboxylic acid ester

**C. DOCUMENTS CONSIDERED TO BE RELEVANT**

| Category* | Citation of document, with indication, where appropriate, of the relevant passages | Relevant to claim No. |
|---|---|---|
| X | US 2017170458 A1 (SOGANG UNIVERSITY RESEARCH FOUNDATION) 15 June 2017 (2017-06-15)<br>claims 1-15, and description, paragraphs [0009]-[0108] | 1-20 |
| X | US 2021276875 A1 (NEXEON LTD) 09 September 2021 (2021-09-09)<br>description, paragraphs [0036]-[0200] | 1-20 |
| A | WO 2022244363 A1 (MURATA MANUFACTURING CO., LTD.) 24 November 2022 (2022-11-24)<br>entire document | 1-20 |
| A | US 2014342235 A1 (SAMSUNG SDI CO., LTD.) 20 November 2014 (2014-11-20)<br>entire document | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 October 2023** | **04 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/085701**

| Patent document cited in search report | Publication date (day/month/year) | Patent family member(s) | Publication date (day/month/year) |
|---|---|---|---|
| US 2017170458 A1 | 15 June 2017 | WO 2016032211 A1 | 03 March 2016 |
| | | KR 20160024326 A | 04 March 2016 |
| | | KR 101613518 B1 | 19 April 2016 |
| | | US 10868297 B2 | 15 December 2020 |
| US 2021276875 A1 | 09 September 2021 | GB 2597759 A | 09 February 2022 |
| WO 2022244363 A1 | 24 November 2022 | None | |
| US 2014342235 A1 | 20 November 2014 | KR 20140134954 A | 25 November 2014 |
| | | US 9496548 B2 | 15 November 2016 |

Form PCT/ISA/210 (patent family annex) (July 2022)